# EUROPEAN PATENT SPECIFICATION

(11) **EP 0 849 571 B1**
(45) Date of publication and mention of the grant of the patent: **05.06.2002**
(21) Application number: 97121825.0
(22) Date of filing: 11.12.1997
(51) Int. Cl.: G01G 15/00

(54) **Weighing system and method for weighing material to be filled into a transport container, for instance a big sack**
Wägesystem und Methode zum Wägen eines in einen Transportbehälter, zum Beispiel einen grossen Sack, einzufüllendes Materials
Système et méthode de pesage pour le pesage de matériaux à remplir dans un conteneur transporteur, par exemple un gros sac

(30) Priority: 18.12.1996 DK 144496
(43) Date of publication of application: 24.06.1998
(73) Proprietor: Tekfa A/S, 8464 Galten (DK)
(72) Inventor: Andersen, Erik Borup, 8464 Galten (DK)
(74) Representative: Gregersen, Niels Henrik

(56) References cited:
- FR-A- 2 445 517
- FR-A- 2 688 882
- US-A- 5 259 425

## Description

The present invention relates to a weighing system for weighing material to be filled into a transport container, for instance a big sack, and of the type mentioned in the introductory part of claim 1, as well as a method as mentioned in claim 7.

In relation with weighing and filling of primarily powdered, thrickable or granulated material into transport containers, for instance big sacks, it is often a problem, that much dust occure by the handling of the material itself. However, heavy dust generation may influence the accuracy of the weighing. Great accuracy is very important, when it for instance concerns weighing of relatively small quantities of costly additives or chemicals. The dust may furthermore cause serious working environment problems, if it concerns aggressively or maybe even poisonous powdered material.

The invention has for its purpose to provide a weighing system of the type mentioned in the introductory part, and which by means of simple provisions makes it easier and more precise to control the dosing of the supply and the contents of the material in transport containers, for instance big sacks.

Document FR-A-2688882 on which the preamble of independent claim 1 is based describes a weighing system for weighing materials to be filled into a transport container, for example as illustrated in the document a big sack. The device is equipped with a lifting arrangement which can maneuver a funnel member into engagement with a sleeve mounted on top of the sack. Furthermore, the lifting member is equipped with weighing devices on protruding arms which are also used to lift and keep the sack extended in order to be able to receive the loose material which is supposed to go into the sack. In this manner the sack will hang from the lifting member and from the weighing member.

Another example of a device suitable for filling transport containers according to weight is described in document US-A-5259425 wherein is disclosed a device whereby a transport container, for example a sack, is mounted inside the device on a lifting table arrangement. Said lifting table arrangement is mounted onto weighing cells whereby as the sack is filled with loose material the contents of the sack can be continuously monitored on a read-out from the loading cells.

The weighing system according to the invention is distinctive in that connecting means consist of a connecting sleeve or bellows, which from an upper inactive position may be moved downwards for establishment of a dustproof passage to the transport container, and which together with related moving means are supported on a first weighing apparatus, that a dosing weighing device comprises means adapted to be moved downwards against the upperside of a cover of the transport container and to remove the cover and bring it upwards to a position inside in an inverted funnel-shaped bottom part of a dosing container, and which by means of dis-placing means are adapted to be moved upwards, so that the material from the dosing container may be lead through said dustproof passage and down into the transport container, before the cover is moved downwards and positioned on the transport container. By means of simple provisions the possibility for - without influencing the weighing - establishing a dustproof connection is hereby obtained, which is of great importance, when it concerns precise weighing and dosing of often costly additives or chemicals. If it concerns weighing or dosing of aggressive or even poisonous additives or chemicals, it is of course extra important to be able to take off and put on the cover automatically and to establish a dust-proof connection with the transport container.

Appropriately the weighing system according to the invention is such provided that said moving means for said connecting sleeve or bellows consists of pneumatic cylinders, which on level with a filling opening of the transport container is mounted on poles, the lower ends of which are secured to an exterior frame of said conveyor section forming first-mentioned weighing apparatus.

Appropriately the weighing system according to the invention may be such provided that the dosing weighing device is provided as a substantial upright cylindric container with a lower funnel-shaped part, which is supported on a horizontal carrying frame, which at opposite ends is supported on vertical, central pole profiles, which at the bottom are secured to a transverse foot part being secured by bolts in a concrete floor.

Advantageously the weighing system according to the invention may be such provided that above-mentioned poles, which via said pneumatic cylinders support said connecting sleeve or bellows partly are surrounded by said central pole profiles carrying the dosing weighing device as well as the dosing container.

The method according to the invention is distinguished in that the method for weighing material to be filled into a transport container, for instance a big sack, uses a weighing system as described above which comprises a conveyor section, for instance a roller conveyor section forming a first weighing apparatus, in the region where it is mounted on electronic weighing cells and connecting means for transferring material to be weighed to said transport container supported on said first weighing apparatus, said connecting means consist of a connecting sleeve or bellows the method comprises the steps of:
a) the connecting means is moveable downwards from an upper position for establishment of a dustproof passage to the transport container;
b) and related moving means supported on said first weighing apparatus are activated so that the material from a dosing container is transferable through said dustproof passage and down into the transport container;
c) when the transport container has been filled the moving means are activated in order to bring the connecting means in the upper position;
d) when the connection means has been removed from the transport container, means are activated to close a cover on the transport container;
e) the transport container is removed and a transport container to be filled is placed in the weighing system, and steps a) to e) are repeated.

It shall be pointed out, that the weighing system according to the invention advantageously also may be used in situations, where it concerns weighing of larger powdered, granulated or thrickable portions of material directly into the transport container or the big sack. Only first-mentioned weighing apparatus, which is built-in in the roller conveyor section, is used for the weighing, as the dustproof coupling between the transport container and the dosing container of the dosing weighing device primary is used, which dosing container successively is supplied with material directly from larger stores of material, for instance a silo.

By use of big sacks as transport containers, it furthermore would be a possibility of the invention that the big sack during handling in the weighing system temporarily is placed in a rack, which uppermost has a nozzle part with cover to which the big sack may be coupled, as the top end of the big sack before and after the coupling to the nozzle part just is closed by means of a usual lacing.

The invention is further explained in the following with the drawing, in which:
- Fig. 1: shows a side view - partly in section - of an embodiment for a weighing system according to the invention for handling of for instance rack-supported big sacks,
- Fig. 2: shows a corresponding side view of a modified embodiment for a weighing system according to the invention,
- Fig. 3: shows a top view of the weighing system according to the invention shown in Fig. 1,
- Fig. 4-6: shows, how the weighing/filling operation according to the invention is carried out by means of a weighing system cf. Figs. 1 - 3, while
- Fig. 7-9: shows, how a modified weighing system according to the invention is used.

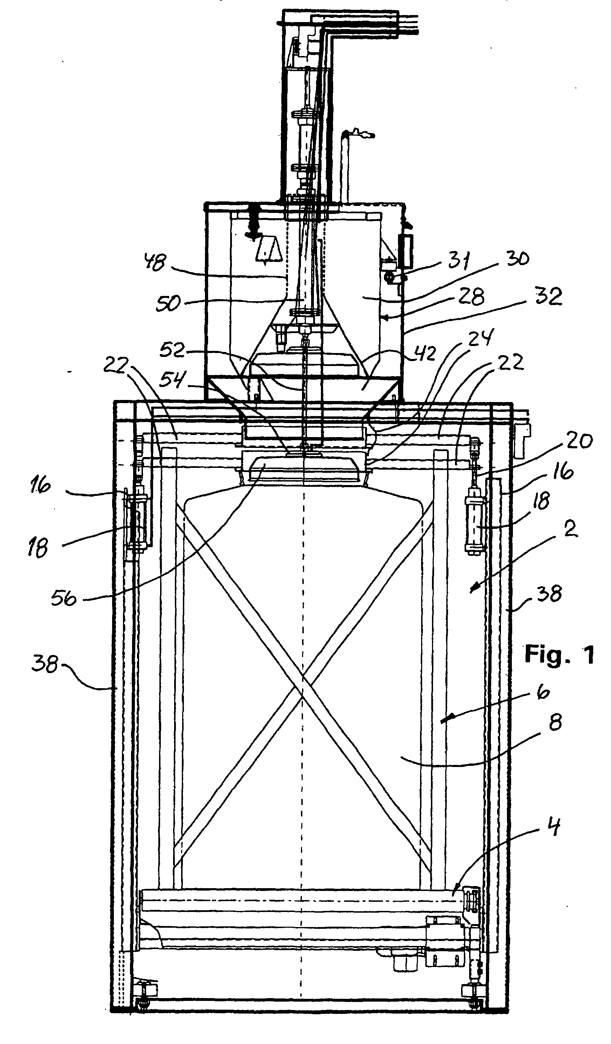

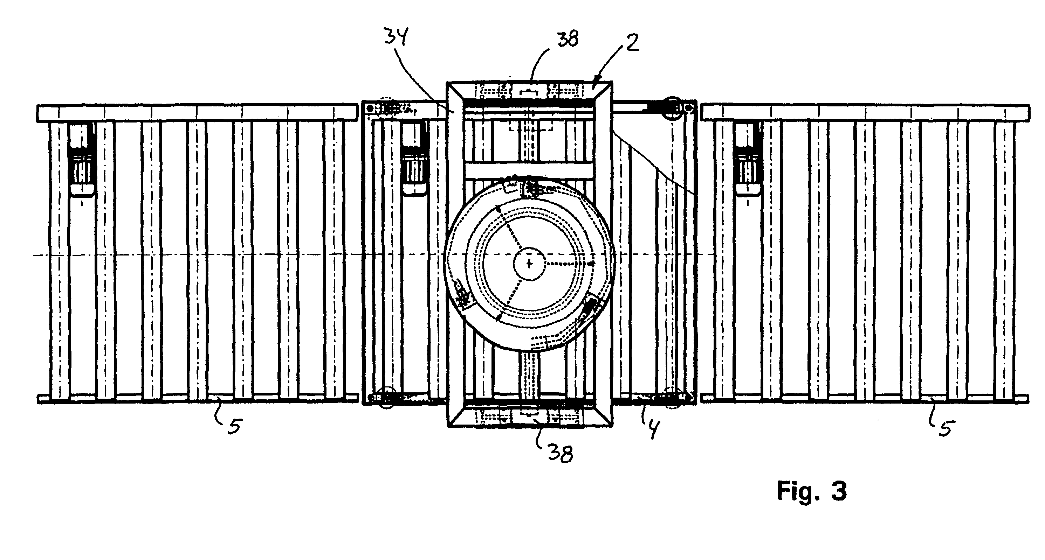

The weighing system 2 shown in Fig. 1 is constructed in connection with a conveyor section 4 of a roller conveyor system 5 shown in Fig. 3 serving to bring the transport container 6, for instance in form of a rack-supported big sack 8, to and from the weighing system 2, so that the contents of the big sack 8 may be weighed. The conveyor section 4 is supported on electronic weighing cells 12 and forms a first weighing apparatus 10, on which the big sack 8 - as shown - may be placed during filling and weighing, respectively.

On opposite end plates 14 of the roller conveyor section 4 lower ends of poles 16 are secured, which support pneumatic cylinders 18, the piston 20 of which via horizontal carrying arms 22 is connected with and carry a connecting sleeve or bellows 24 (shown in an upper inactive position and a lower active position), being adapted to form a dust-proof passage connection between an upper filling opening of the big sack 8 and an above roller conveyor section 4 placed combined dosing device 28 and dosing container 30, which via electronic weighing cells 31 is suspended internal in a cylindric house 32, which is supported on a carrying frame 34. Opposite end plates 36 of this frame 34 are carried of vertical poles 38 consisting of strong U-profiles - which - without touching - partly surround the above-mentioned poles 16 carrying the pneumatic cylinders 18 for said connecting sleeve or bellows 24.

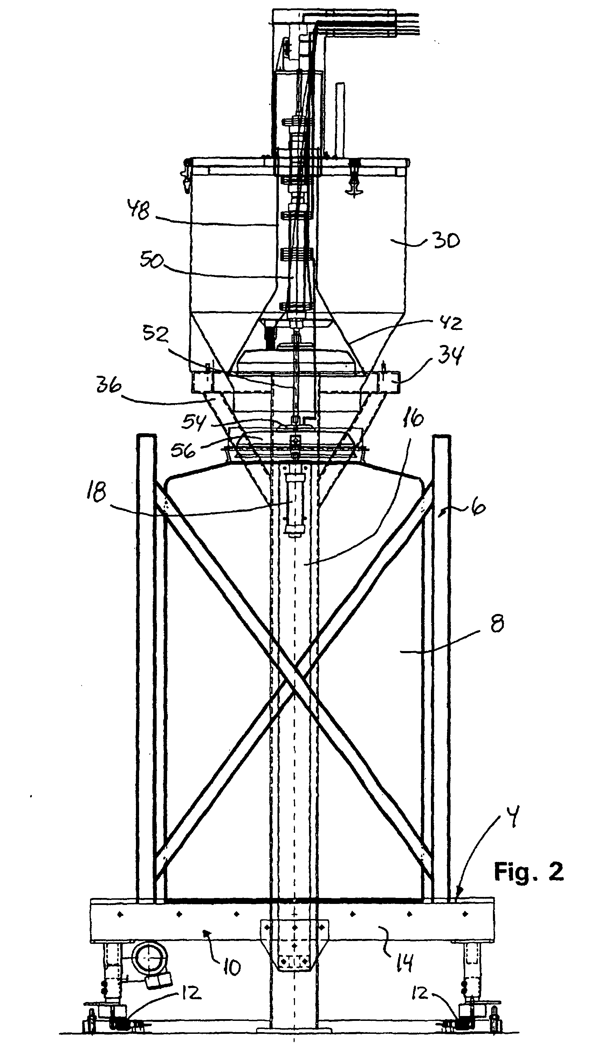

The weighing system 2 is in Fig. 2 shown partly from a second side and partly in a - modified embodiment with a dosing container 30, but without a separate dosing weighing device. In this case the connecting sleeve or bellows 24 are primarily used to form a dustproof connection between the big sack 8 and the dosing container 30, which via a larger supply of material, for instance a silo, successively is supplied with material, which is weighed by means of first-mentioned weighing apparatus 10 consisting of the transport or roller conveyor section 4.

The combined dosing container and dosing device 30, which is provided with a lower funnel-shaped shell part is inside provided with a reversed funnel-shaped bottom part 42 being displacable secured in vertical direction by means of a pneumatic cylinder 44, so that the bottom part 42, when the pneumatic cylinder 44 is activated, may be positioned in a lower position, where the bottom part 42 rests against the shell part 40, that means closes a ring-shaped discharge opening 46 of the dosing container 30. When the pneumatic cylinder 44 is deactivated, the bottom part 42 is displaced to an upper position, so that the discharge opening 46 is open.

Inside a central tube part 48 being connected with the reversed funnel-shaped bottom part 42, a further pneumatic cylinder 50 is arranged, the piston 52 of which is provided with a suction disc 54. By activation of the pneumatic cylinder 50 the piston 52 with the suction disc 54 is moved downwards for resting against the topside of a circular cover 56 of the big sack 8, so that the cover 56 by deactivation of the pneumatic cylinder 50 may be lifted off and brought upwards to a position inside the reversed funnel-shaped bottom part 42. That means that the cover 56 do not get in the way, when the discharge opening subsequently is opened by displacement upwards of the bottom part 42.

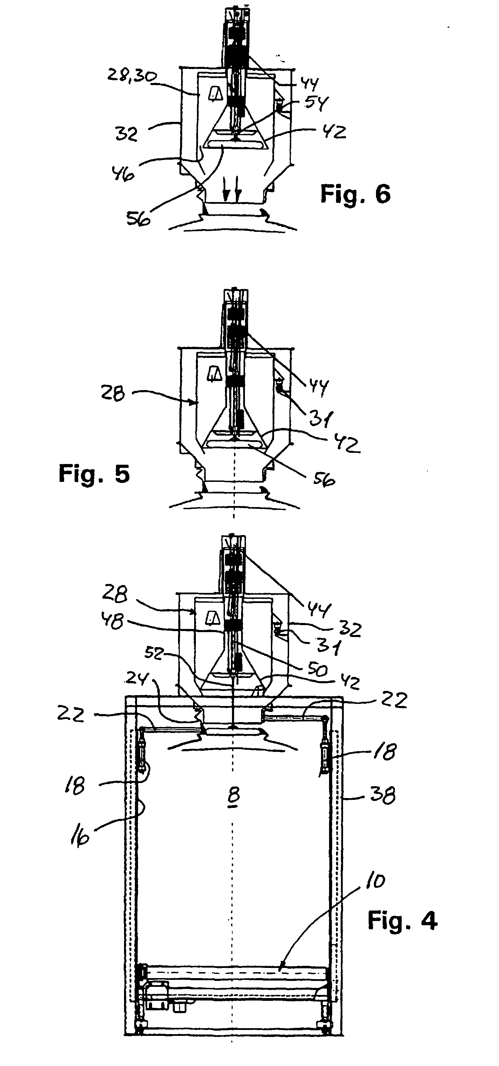

The more detailed mode of operation of the weighing system according to the invention is further explained in the following with reference to Figs. 4 - 6 and Figs. 7 - 9, respectively.

In the right side of Fig. 4 the connecting sleeve or bellows 24 is shown in its upper inactive position corresponding to the fact that the pneumatic cylinders 18 are activated. When the transport container 6 or the big sack 8 is correctly placed on first-mentioned weighing apparatus 10, the pneumatic cylinders 18 are deactivated - as shown in the left side of Fig. 4 - whereby the connecting sleeve or bellows 24 is displaced downwards and connected with the filling opening 26 of the big sack 8, so that a dustproof passage between the big sack 8 and the dosing container or the surrounding cylindric house 32 is established.

Thereafter the pneumatic cylinder 50 is activated, and the piston 52 moves the suction disc 54 downwards towards the topside of the cover 56. Then the pneumatic cylinder 50 is deactivated, whereby the piston 52 and the suction disc 54 take off and bring along the cover 56 to said position inside the reversed funnel-shaped bottom part 42 cf. Fig. 5. Hereafter a taring is made, so that the weight of the cover 56 is not included in the weighing.

Now the material may be supplied to the dosing container 30 through not shown upper openings thereof. When desired portion of material is weighed, the pneumatic cylinder 44 is deactivated for the reversed funnel-shaped bottom part 42, so that the ring-shaped discharge opening 46 - as shown in Fig. 6 - may be opened and the portion of material is supplied into the big sack 8 through the dustproof passage established by means of the connecting sleeve or bellows 24. In a corresponding manner further portions of material may be weighed and supplied into the big sack 8, if the total weight further-more subsequent may be controlled by means of the first-mentioned weighing apparatus 10, which consists of the roller conveyor section 4, on which the big sack 8 is supported.

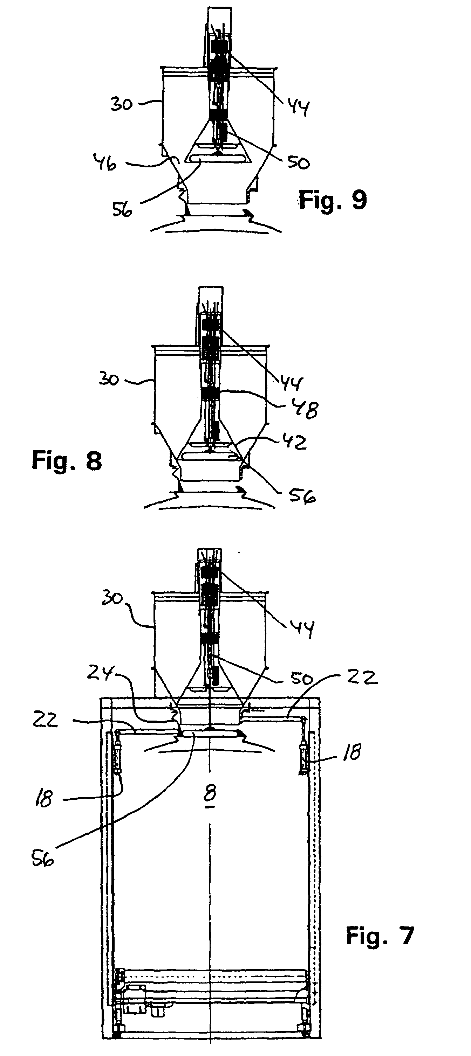

In a corresponding manner as in Figs. 4 - 6 it is shown in Figs. 7 - 9, how a transport container 6 or a big sack 8 may be supplied with material through a dosing container 30 without a built-in separat dosing device. The subsequent weighing of the big sack 8 is carried out by means of first-mentioned weighing apparatus 10 built-in in the roller conveyor section 4, as the dustproof coupling of the dosing container 30 and the big sack 8 is used via the connecting sleeve or bellows 24.

## Claims

1. A weighing system (2) for weighing material to be filled into a transport container (6), for instance a big sack (8), and comprising a conveyor section (4), for instance a roller conveyor section forming a first weighing apparatus (10), in the region where it is supported on electronic weighing cells (12), and connecting means (24) for transferring material to be weighed to said transport container (6) supported on said first weighing apparatus (10), **characterized in that** said connecting means (24) consist of a connecting sleeve or bellows (24), which from an upper position are moveable downwards for establishment of a dustproof passage to the transport container (6), and which together with related moving means (18) are supported on said first weighing apparatus (10).

2. A weighing system according to claim 1, **characterized in that** a dosing weighing device (28) is arranged above said first weighing apparatus (10).

3. A weighing system according to claim 2, **characterized in that** the dosing weighing device (28) comprises means which are moveable downwards against the upper side of a cover (56) of a transport container (6) and said means being able to remove the cover (56) and to bring said cover (56) upwards to a position inside in an inverted funnel-shaped bottom part (42) of a dosing container (30) and which by means of displacing means are moveable upwards so that the material from the dosing container (30) is transferable to said dustproof passage and down into the transport container (6) before the cover (56) is moved downwards and positioned on the transport container (6).

4. A weighing system according to claim 1, **characterized** inthat said moving means for said connecting sleeve or bellows (24) consists of pneumatic cylinders (18), which on level with a filling opening of the transport container (6) is mounted on poles (16), the lower ends of which are secured to an exterior frame of said conveyor section (4) forming first-mentioned weighing apparatus (10).

5. A weighing system according to any of the claims 2 to 3, **characterized in that** the dosing weighing device (28) is provided as a substantial upright cylindric container with a lower funnel-shaped part (40), which is supported on a horizontal carrying frame, which at opposite ends is supported on vertical poles (38) consisting of strong U-profiles, which at the bottom are secured to a transverse foot part being secured by bolts in a concrete floor.

6. A weighing system according to claim 5, **characterized in that** said poles (38), which via pneumatic cylinders (18) support said connecting sleeve or bellows (24) partly are surrounded by said central pole (38) profiles carrying the dosing weighing device (28) as well as the dosing container (30).

7. A method for weighing material to be filled into a transport container (6), for instance a big sack (8) using a weighing system (2) according to claim 1 comprising a conveyor section (4), for instance a roller conveyor section forming a first weighing apparatus (10), in the region where it is mounted on electronic weighing cells (12) and connecting means (24) for transferring material to be weighed to said transport container (6) supported on said first weighing apparatus (10), said connecting means consist of a connecting sleeve or bellows (24) the method comprises the steps of:
a) the connecting means (24) is moveable downwards from an upper position for establishment of a dustproof passage to the transport container (6);
b) and related moving means (18) supported on said first weighing apparatus (10) are activated so that the material from a dosing container is transferable through said dust-proof passage and down into the transport container (6);
c) when the transport container (6) has been filled the moving means (18) are activated in order to bring the connecting means (24) in the upper position;
d) when the connection means (24) has been removed from the transport container (6), means (50) are activated to close a cover (56) on the transport container (6);
e) the transport container (6) is removed and a transport container to be filled is placed in the weighing system, and steps a) to e) are repeated.

## Patentansprüche

1. Wägesystem (2) zum Wägen eines in einen Transportbehälter (6), zum Beispiel einen großen Sack (8) einzufüllenden Materials, und eine Förderbandsektion (4) umfassend, zum Beispiel eine Rollförderbandsektion, die ein erstes Wägegeräts (10) bildet, in dem Gebiet, wo es sich auf elektronischen Wägezellen (12) stützt, und Verbindungsmittel (24) zur Übertragung von zu wägendem Material zum erwähnten Transportbehälter (6), der sich auf dem erwähnten ersten Wägegerät (10) stützt, **dadurch gekennzeichnet, dass** die erwähnten Verbindungsmittel (24) eine Verbindungsmuffe oder -bälge (24) umfassen, die von einer oberen Position nach unten bewegt werden könnnen, um einen staubgesicherten Verbindungsgang zum Transportbehälter (6) zu bilden, und welche zusammen mit bezogenen Bewegungsmitteln (18) sich auf das erste Wägegerät (10) stützen.

2. Wägesystem nach Anspruch 1, **dadurch gekennzeichnet, dass** die Dosierungwägevorrichtung (28) über dem erwähnten erste Wägegerät (10) angeordnet ist.

3. Wägesystem nach Anspruch 2, **dadurch gekennzeichnet, dass** die Doserierungswägevorrichtung (28) Mittel umfasst, die nach unten gegen die obere Seite einer Abdeckung (56) von einem Tranportbehälter (6) bewegbar sind, und wobei die erwähnten Mittel die Abdeckung entfernen können, und die erwähnte Abdeckung (56) nach oben zu einer Position innerhalb einem umgekehrten pyramidenförmigen Unterteil (42) eines Dosierierungsbehälter (30) bringen können, und die mittels Verschiebungsmittel nach oben bewegt werden können, damit das Material vom Dosierungsbehälter (30) zum erwähnten staubgesicherten Verbindungsgang übertragen werden kann, und nach unten in den Transportbehälter (6), bevor die Abdeckung (56) nach unten bewegt wird, und auf den Transportbehälter positioniert wird.

4. Wägesystem nach Anspruch 1, **dadurch gekennzeichnet, dass** die erwähnten Bewegungsmittel für die erwähnte Verbindungsmuffe oder -bälge (24) pneumatische Zylinder (18) umfassen, die auf Ebene mit einer Füllöffnung des Transportbehälters (6) auf Stängen (16) montiert sind, wobei die niedrigeren Enden zu einem externen Rahmen der erwähnten Förderbandsektion befestigt sind, die das ersterwähnte Wägegerät bildet.

5. Wägesystem nach jedem der Ansprüche 2-3, **dadurch gekennzeichnet, dass** die Dosierungswägevorrichtung (28) wie ein hauptsächlich aufrechtstehender zylindrischer Behälter mit einer niedrigeren pyramideförmigen Teil (40) vorgesehen ist, der sich auf einem horizontalen Trägerrahmen stützt, der sich bei entgegengesetzten Enden auf vertikalen Stängen (38) stützt, die starke U-Profile umfassen, die am Boden zu einem transversalen Basisteil befestigt sind, der mittels Bolzen in einem Betonboden befestigt ist.

6. Wägesystem nach Anspruch 5, **dadurch gekennzeichnet, dass** die erwähnten Stängen (38), die mittels pneumatischen Zylinder die erwähnte Verbindungsmuffe oder -bälge (24) stützt, teilweise von erwähnten zentralen Stangenprofilen umgeben sind, die die Dosierungswägevorrichtung (28) tragen, so wie auch den Dosierungsbehälter (30).

7. Methode zum Wägen eines in einen Transportbehälter, zum Beispiel einen großen Sack (8), einzufüllendes Materials, wobei ein Wägesystem (2) nach Anspruch 1 verwendet wird, das eine Förderbandsektion (4) umfasst, zum Beispiel eine Rollförderbandsektion, die ein erstes Wägegerät (10) bildet, im Gebiet wo es auf elektronischen Wägezellen (12) montiert ist, und Verbindungsmittel (24) zur Übertragung von zu wägendem Material zum erwähnten Transportbehälter (6), der sich auf dem erwähnten ersten Wägegerät (10) stützt, wobei das erwähnte Verbindungsmittel eine Verbindungsmuffe oder -bälge umfasst, umfasst die Methode folgende Schritte :
a) Das Verbind ungsmittel (24) ist nach unten von einer oberen Position für die Bildung eines staubgesicherten Verbindungsgangs zum Transportbehälter (6) bewegbar;
b) und bezogene Bewegungsmittel (18), die sich auf dem erwähnten ersten Wägegerät (10) stützen, aktiviert werden, damit das Material von einem Dosierungsbehälter durch den erwähnten staubgesicherten Verbindungsgang und nach unten in den Transportbehälter (6) übertragbar ist;
c) wenn der Transportbehälter (6) gefüllt worden ist, werden die Bewegungsmittel (18) aktiviert, um das Verbindungsmittel (24) in einer oberen Position zu bringen;
d) wenn das Verbindungsmittel (24) vom Transportbehälter (6) entfernt worden ist, werden Mittel (50) aktiviert, um eine Abdeckung (56) auf dem Transportbehälter (6) zu schließen;
e) Der Transportbehälter (6) wird entfernt, und ein neuer zu füllenden Transportbehälter wird im Wägesystem angebracht, und die Schritte a) zu e) werden wiederholt.

## Revendications

1. Système de pesage (2) pour le pesage de matériaux à être remplis dans un conteneur transporteur (6), par exemple un gros sac (8), et comprenant une section (de?) transporteur (4), par exemple une section de transporteur à rouleaux formant un premier appareil de pesage (10), dans la région où il est supporté sur des cellules de pesage (12), et des moyens de fixation (24) pour transférer des matériaux à être pesés audit conteneur transporteur (6) supporté audit premier appareil de pesage (10), **cara ctérisé** en ce que lesdits moyens de fixation (24) sont constitués d'un manchon ou d'un soufflet de liaison (24) étants déplaçables vers le bas d'une position supérieure pour l'etablissement d'un passage étanche aux poussières au conteneur transporteur (6) et qui avec des organes mobiles appartenant (18) sont supportés sur ledit premier appareil de pesage (10).

2. Système de pesage selon la revendication 1, **caractérisé en ce qu'**un dispositif peseuse-doseuse (28) est arrangé au-dessus du premier appareil de pesage (10).

3. Système de pesage selon la revendication 2, **caractérisé en ce que** le dispositif peseuse-doseuse (28) comporte des organes qui sont déplaçables vers le bas contre la face supérieure d'un couvercle (56) d'un conteneur transporteur (6) et lesdits organes pouvant enlever le couvercle (56) et amener ledit couvercle (56) vers le haut à une position intérieure dans une partie de fond conique inversé (42) d'un conteneur de dosage (30) et qui à l'aide d'organes de déplacement sont déplaçables vers le haut de sorte que les matériaux du conteneur de dosage (30) soient transférables audit passage étanche aux poussières et vers le bas au conteneur transporteur (6) avant que le couvercle (56) soit déplacé vers le bas et positionné sur le conteneur transporteur (6).

4. Système de pesage selon la revendication 1, **caractérisé en ce que** lesdits organes mobiles dudit manchon ou dudit soufflet de fixation (24) sont constitués de cylindres pneumatiques (18) qui au plan d'une ouverture de remplissage du conteneur transporteur (6) sont montés sur des barres (16) dont les extrémités inférieures sont fixées à un cadre extérieur de ladite section transporteur (4) formant ledit premier appareil de pesage (10).

5. Système de pesage selon l'une quelconque des revendications 2 à 3, **caractérisé en ce que** le dispositif peseuse-doseuse (28) est prévu comme un conteneur cylindrique surtout montant avec une partie conique inférieure (40) supportée sur un cadre de support horisontal qui à ses extrémités opposées est supporté sur des barres verticales (38) constituées des profils forts en U, qui au fond sont fixés à une partie basse transversale étant serrée à vis dans une chape ciment.

6. Système de pesage selon la revendication 5, **caractérisé en ce que** lesdites pôles (38) qui à l'aide des cylindres pneumatiques (18) partiellement supportent ledit manchon ou ledit soufflet de fixation (24) sont entourées desdits profils de la pôle centrale (38) supportant le dispositif peseuse-doseuse (28) ainsi qui le conteneur de dosage (30).

7. Méthode pour matériaux de pesage à être rempli dans un conteneur transporteur (6), par exemple un gros sac (8) utilisant un système de pesage (2) selon la revendication 1 comprenant une section transporteur (4), par exemple une section de transporteur à rouleaux formant un premier appareil de pesage (10), dans la région où il est supporté sur des cellules de pesage (12), et des moyens de fixation (24) pour transférer des matériaux à être pesé audit conteneur transporteur (6) supporté audit premier appareil de pesage (10), lesdits moyens de fixation (24) sont constitués d'un manchon ou d'un soufflet de liaison (24), la méthode comporte les étapes suivantes:
a) les moyens de fixation (24) sont déplaçables d'une position supérieure vers le bas pour l'établissement d'un passage étanche aux poussières au conteneur transporteur (6);
b) et des organes mobiles appartenant (18) supportés sur ledit premier appareil de pesage (10) sont activés de sorte que les matériaux d'un conteneur de dosage soient transférable à travers ledit passage étanche aux poussières et vers le bas dans le conteneur transporteur (6);
c) quand le conteneur transporteur (6) a été rempli, les organes mobiles (18) sont activés pour amener les moyens de fixation (24) dans la position supérieure;
d) quand les moyens de fixation (24) ont été écartés du conteneur transporteur (6), des organes (50) sont activés pour fermer un couvercle (56) sur le conteneur transporteur (6);
e) le conteneur transporteur (6) est enlevé et un conteneur transporteur à être rempli est placé dans le système de pesage, et les étapes a) à e) sont repétées.
